(19) **Europäisches Patentamt**

**European Patent Office**

**Office européen des brevets**

(11) Publication number: **0 133 057**
**B1**

(12) **EUROPEAN PATENT SPECIFICATION**

(45) Date of publication of patent specification: **17.11.88**

(51) Int. Cl.⁴: **B 62 M 9/12**

(21) Application number: **84305234.1**

(22) Date of filing: **01.08.84**

(54) Rear derailleur.

(30) Priority: **02.08.83 JP 121079/83 u**
**02.08.83 JP 121080/83 u**

(43) Date of publication of application:
**13.02.85 Bulletin 85/07**

(45) Publication of the grant of the patent:
**17.11.88 Bulletin 88/46**

(84) Designated Contracting States:
**BE DE FR GB IT**

(56) References cited:
**EP-A-0 020 033**
**EP-A-0 031 712**
**FR-A-2 454 954**
**US-A-3 960 025**

(73) Proprietor: **SHIMANO INDUSTRIAL COMPANY LIMITED**
**77, 3-cho Oimatsu-cho Sakai-shi**
**Osaka (JP)**

(72) Inventor: **Nagano, Masashi**
**74-19 Midorigaoka**
**Izumi-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

## Description

This invention relates to a rear derailleur for a cycle and more particularly to a rear derailleur for switching a drive chain between the sprockets of a multistage cycle sprocket assembly.

Generally, this kind of rear derailleur has a fixing member, a movable member movable axially relative to the fixing member, a chain guide having a guide pulley, a tension pulley and pulley plates, and pivotally supported on the movable member, and a tension spring disposed for acting between the movable member and the chain guide, so that when a speed control lever is moved in a forward direction to displace, via a control wire, the movable member moves towards a maximum tooth number low speed sprocket against the force of a return spring, and when the control lever is moved in a return direction to displace the movable member towards a minimum tooth number high speed sprocket under the influence of the return force of the return spring, the chain guide being disposed at position corresponding to a desired sprocket for switching of the chain thereto.

A cyclist, especially, an unskilled cyclist, may not move the operating lever far enough so that the chain guide displacment stops before the centre line, width-wise, of the desired sprocket is reached thereby resulting in insuffient movement of the chain guide.

The chain guide of a conventional derailleur, as shown in Fig. 4, has a pair of pulley plates *a* and *b* mounted swingably on a fixed shaft *e* on the movable member *d* via a tubular pivot shaft *c* fixed to one of the pulley plates *a*. A bearing cylinder *f* is supported between the pulley plates *a* and *b*, a guide pulley *g* is supported rotatably on the outer periphery of the bearing cylinder *f*, a screw thread *h* is formed on the outer peripheral surface of the pivot shaft *c*, and a nut *n* tightly screwed onto the screw thread *h*, so that the other pulley plate *b* is axially urged against the bearing cylinder *f* to hold it between the pulley plates *a* and *b* and also restrain the guide pulley *g* from axial movement.

When the extent of movement of the chain guide during gear changing is insufficient, the chain having partially engaged the desired sprockets skews between the guide pulley and the sprocket being engaged by the chain. As a result the skewed portion of the chain often strikes the chain exit or disengagement portion of the guide pulley and the teeth at the chain entrance or engagement portion of the sprocket, thereby generating noise. French patent specification FR—A—2454954 discloses a derailleur or cycle gear changer comprising a support transversely movable with respect to the free wheel and a yoke pivotably movable on an axle of the support. The yoke rotatably supports two rollers, a so-called chain tension roller and a chain guide roller which are laterally movable with respect to the support. This may cause misalignment of the chain or the guide pulley with the relevant sprocket.

It is an object of the present invention to avoid or minimize one or more of the disadvantages associated with the prior art.

The present invention provides a rear derailleur for a cycle, which derailleur has a fixing member, a movable member movable with respect to said fixing member, a chain guide provided with a guide pulley, a tension pulley and at least one pulley plate and supported swingably on said movable member, and a tension spring disposed for acting between said movable member and said chain guide, said chain guide being provided with a support means for rotatably supporting said guide pulley and tension pulley characterised in that said support means is formed and arranged for supporting said guide pulley and tension pulley so that said guide pulley only is axially movable within a predetermined range relative to said pulley plate in a gap provided between the said guide pulley and said pulley plate.

Thus the derailleur of the present invention uses chain tension created by the tension spring to move the guide pulley toward the sprocket to which the chain has been switched, so that the skewed portion of the chain is decreased in its degree of skew thereby substantially reducing noise generated when the chain guide is not adequately displaced.

Accordingly, when the chain guide is displaced insufficiently resulting in skewing of the chain between the desired sprocket and the chain guide, the guide pulley, only, is moved axially through a pre-determined distance through the gap between the guide pulley and the pulley plate under the influence of chain tension created by the tension spring and then stops at a position corresponding to the centre line, width-wise, of the sprocket. The skewed chain line is thereby corrected, ensuring that the drive chain is prevented from striking the teeth at the chain exit portion of the guide pulley and at the chain entrance portion of the sprocket, thereby enabling reduction of noise generation.

In a preferred embodiment of the invention the support means uses a bearing cylinder fixed to the pulley plate by means of the spring force of the tension spring and having a slide surface for the guide pulley and an annular projection at a spring holder, which is engageable with the axial end face of the bearing cylinder by means of the spring force of the tension spring and projects radially outwardly beyond the outer periphery of the bearing cylinder so as to restrict the range of movement of the guide pulley.

Further preferred features and advantages of the invention will appear from the following detailed description given by way of an example of a preferred embodiment illustrated with reference to the accompanying drawings in which:

Fig. 1 is a front elevation of a rear derailleur of the invention, mounted together with a multistage sprocket assembly on a cycle;

Fig. 2 is an enlarged scale axial section of the principal portion only of the rear derailleur in Fig. 1.

Fig. 3 is a partial end view of the derailleur of Fig. 1 illustrating chain switching; and

Fig. 4 is a partially sectioned view corresponding generally to Fig. 2 of the principal portion of a conventional rear derailleur.

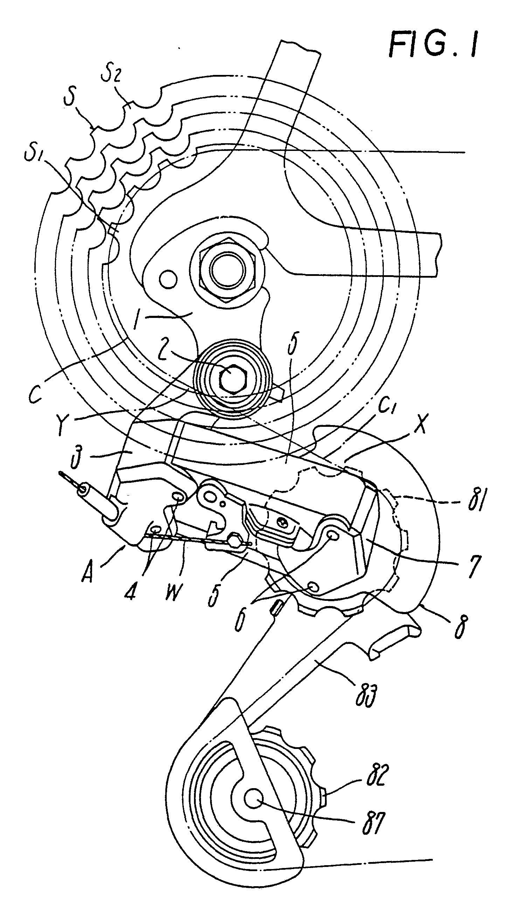

Fig. 1 shows a derailleur $A$ mounted together with a multi-stage sprocket assembly $S$ at the rear hub of the cycle. The derailleur basically comprises; a rear derailleur body $A$ with a fixing member 3 pivotally connected to a mounting bracket 1 for the rear hub via a horizontal shaft 2, a pair of link members 5 pivotally connected to the fixing member 3 via a pair of first pivot pins 4, and a movable member 7 pivotally connected to the fore ends of the linkage members 5 via a pair of second pivot pins 6. A chain guide 8 comprises a guide pulley 81 for guiding a drive chain $C$ to a desired sprocket of the multi-stage sprocket assembly $S$, a tension pulley 82 and one pulley plate 83 for supporting the pulleys 81 and 82, and is supported swingably on the movable member 7. A tension spring 12 is interposed between the chain guide 8 and the movable member 7 for acting between them and biasing the chain guide 8 clockwise as viewed in Fig. 1.

The chain guide 8 has the guide pulley 81 disposed close to the multistage sprocket assembly $S$ and the tension pulley 82 spaced apart therefrom, the chain $C$ being carried by the pulleys 81 and 82. A control wire $W$ fixed to the linkage member 5 is pulled in use to shift the movable member 7 against the return force of a return spring (not shown) towards a maximum tooth number low speed sprocket $S_2$, and the return force of the sping used to shift the movable member 7 towards a minimum tooth number high speed sprocket $S_1$ thereby providing switching of the drive chain $C$ to any desired sprocket of the multistage sprocket assembly $S$.

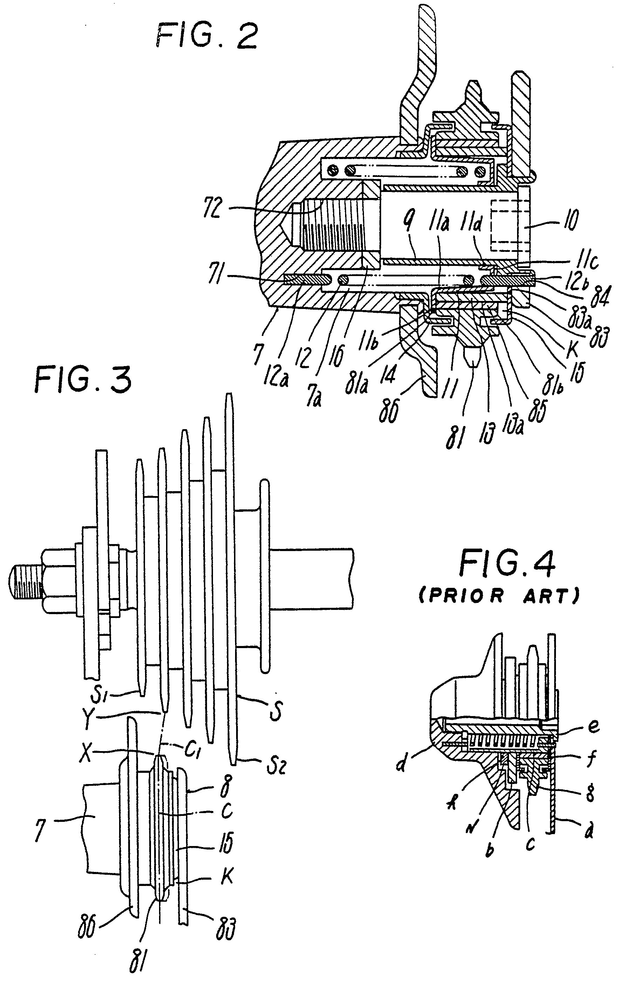

In the above described rear derailleur a cylindrical pivot shaft 9 is fixed to one end of pulley plate 83, which is in turn supported swingably through the pivot shaft 9 to a fixing shaft 10 secured to the movable member 7. At the outer periphery of the pivot shaft 9 are supported a spring holder 11 comprising a cylinder 11$a$, an outward flange 11$b$ extending radially outwardly from one axial end of cylinder 11$a$, and an inward flange 11$c$ extending radially inwardly from the other axial end of said cylinder 11$a$, and a tension spring 12 comprising a coiled spring with a pair of first and second retaining ends 12$a$ and 12$b$. The tension spring 12 abuts at its one coiled end against the bottom of an annular recess 7$a$ on the movable member 7 and at the other coiled end against the lateral side of the inward flange 11$c$ so that the resilient biasing force of the tension spring 12 acts axially on the spring holder 11. The first retaining end of the tension spring 12 is engaged in a bore 71 within the recess 7$a$, the second retaining end of the same extends through an aperture in the inward flange 11$c$ to engage in a bore 84 provided in the pulley plate 83. A bearing cylinder 13 having at its outer periphery a slide surface 13$a$ for the guide pulley 81 is supported on the outer periphery of the spring holder 11, and abuts at one axial end against the inside surface of the pulley plate 83 through a cup 15. The other axial end of spring holder 11 engages with the outer flange 11$b$ at the spring holder 11. The tension spring 12 biases the bearing cylinder 13 toward the pulley plate 83 and fixes the same thereto. The guide pulley 81 is supported so as to be rotatably and axially movable on the outer periphery of the bearing cylinder 13. The outward flange 11$b$ engages with the inside surface 81$a$ of the boss of the guide pulley 81 to restrain the guide pulley 81 from moving towards the movable member 7, and between the outside surface 81$b$ of the boss of guide pulley 81 and the pulley plate 83 is provided a gap $K$, which allows the guide pulley 81 to move axially, said gap being formed by means of the greater axial length of the bearing cylinder 13 as compared with the boss of the guide pulley 81 as shown in Fig. 2. In addition, a bush 85 is fitted into a shaft bore at the boss of guide pulley 81 and the bearing cylinder 13 is formed of a sintered alloy.

A cylindrical portion 11$d$ is provided at the distal end of the outward flange 11$c$ of the spring holder 11 and fitted onto the pivot shaft 9 to prevent radial play with respect to the bearing cylinder 13. The spring holder 11 does not require to have any specific form of construction and requires merely to apply the axial spring force of the tension spring 12 to the bearing cylinder 13. The rear derailleur shown in the drawing is also construed so that the first and second pivot pins 4, 6 are inclined with respect to the place perpendicular to the principal axis of the multistage sprocket assembly $S$, so that when the chain is switched from one sprocket to another the chain guide 8 is moved parallel to the axis of the multistage sprocket assembly $S$ and simultaneously moved radially thereof in the plane perpendicular to the axis of the same.

Figs. 1 and 2 also show a pulley plate 86 caulked to the movable member and cups 14, 15 disposed at both axial side of the guide pulley 81 and fixed to the movable member 7 and pulley plate 83 respectively. Also a pulley shaft 87 is provided for rotatably supporting the tension pulley 82 on the pulley plate 83 in substantially conventional manner i.e. so that it is substantially axially immovable, as well as a washer 16.

Referring again to Fig. 1, the chain guide 8 is positioned opposite a high speed sprocket $S_1$ the chain engaging with said high speed sprocket. A speed control lever (not shown) is operated in use to pull the control wire $W$ and thereby shift the chain guide 8 towards a low speed sprocket $S_2$ for switching the chain thereto.

When the speed control lever is moved insufficiently and the chain guide 8 stopped short in its displacement, at a position where it is not yet opposite the centre line, widthwise, of the desired sprocket to which the chain is intended to be switched to, the chain tends to skew between the guide pulley 81 and the desired sprocket. In this case, the tension in the moving chain shifts the guide pulley 81 axially towards, the sprocket in engagement with the chain within a range of movement thereof defined by the gap $K$ between said guide pulley and plate 83. As a result the degree of skew of the chain between the sprocket it engages and the guide pulley 81 is reduced, thereby reducing the noise generated by the contact between the skewed chain portion $C_1$ and the teeth $X$ at the chain exit of the guide pulley 81 and the teeth $Y$ at the chain entrance portion of the sprocket.

Naturally, noise generated when the chain is switched from a low speed sprocket to a high speed one, can similarly be reduced.

In the rear derailleur of the invention, the bearing cylinder 13 is supported through the spring holder 11 onto the outer periphery of one axial end of pivot shaft 9 supported on the pulley plate 83, the guide pulley 81 is supported on the outer periphery of the bearing cylinder 13, the tension spring 12 is fitted onto the pivot shaft 9 and retained at the first end $12a$ in the bore 71 of the movable member 7 and at the second end $12b$ in the bore 84 of the pulley plate 83, and the fixing shaft 10 is inserted into the pivot shaft 9 and screw threadedly engages at the distal end a threaded bore 72 provided on the movable member 7. The fixing shaft 10 is tightened to compress the tension spring 12 axially and the axial spring force thereof acts on the bearing cylinder 13 through the spring holder 11, thereby holding the bearing cylinder 13 against the pulley plate 83 and mounting the pulley plate 83 swingably on the movable member 7, thereby supporting the chain guide 8 on the movable member 7. This form of construction utilizes the spring force of the tension spring 12 to hold the bearing cylinder 13 against the pulley plate 83, so that the bearing cylinder 13 is reliably held. Moreover, the bearing cylinder holding construction is very simple and inexpensive to produce as a whole in comparison with the conventional forms of construction such as that shown in Fig. 4.

Alternatively, the pulley plates 83 and 86 could be connected through a pulley shaft and mounted swingably with respect to the movable member 7, or only one pulley plate 83 or 86 provided, or as a yet further alternative one of said pulley plates 83 or 86 could be formed integrally with the movable member 7.

## Claims

1. A rear derailleur for a cycle, which derailleur has a fixing member (3), a movable member (7) movable with respect to said fixing member, a chain guide (8) provided with a guide pulley (81), a tension pulley (82) and at least one pulley plate (83) and supported swingably on said movable member (7), and a tension spring (12) disposed for acting between said movable member (7) and said chain guide (8), said chain guide (8) being provided with a support means (10—13) for rotatably supporting said guide pulley (81) and tension pulley (82).

characterised in that said support means (10—13) is formed and arranged for supporting said guide pulley (81) and tension pulley (82) so that said guide pulley (81), only is axially movable within a predetermined range relative to said pulley plate (83) in a gap ($K$) provided between said guide pulley (81) and said pulley plate (83).

2. A derailleur according to claim 1, wherein a pivot shaft (9) is provided for supporting said chain guide (8) swingably on said movable member (7), said support means (10—13) for said guide pulley being arranged coaxially with said pivot shaft (9).

3. A derailleur for a cycle according to claim 2, wherein said support means has a bearing cylinder (11a) having a slide face for said guide pulley (81) and fixed by a fixing means (10) to said pulley plate (83) and a restriction means for restricting the range of movement of said guide pulley (81).

4. A derailleur according to claim 3, wherein the tension spring comprises a coiled spring (12) having a pair of retaining ends ($12a$, $12b$) is supported around said pivot shaft (9), and is engaged at one retaining end ($12a$) with said movable member (7) and at the other retaining end ($12b$) with said pulley plate (83), said pivot shaft (9) having a spring holder (11) for said spring, said spring holder (11) having an engagement means ($11b$) engaging said bearing cylinder (13) so that an axial spring force of said spring (12) received by said spring holder (11) fixedly presses said bearing cylinder (13) onto said pulley plate (83).

5. A derailleur according to claim 4, wherein said engagement means comprises a projection ($11b$) extending radially outwardly from said spring holder (11) and engageable with one end face of said bearing cylinder (13), said projection ($11b$) projecting radially outwardly beyond the outer periphery of said bearing cylinder (13) and serving as said restriction means for restricting the range of movement of said guide pulley (81).

## Patentansprüche

1. Hinterradkettenschaltung für ein Fahrrad, welche ein Befestigungsteil (3), ein bewegliches Teil (7) bewegbar in bezug auf das Befestigungsteil, eine Kettenführung (8), die mit einer Führungsscheibe (81), einer Spannrolle (82) und wenigstens einer Spannplatte (83) versehen und schwenkbar auf dem beweglichen Teil (7) gehalten ist, und eine Spannfeder (12) aufweist, die zum Eingreifen zwischen dem beweglichen Teil (7) und der Kettenführung (8) angeordnet ist, wobei die Kettenführung (8) mit einem Trägermittel (10—13) zur drehbaren Halterung der Führungsscheibe (81) und der Spannrolle (82) versehen ist,

dadurch gekennzeichnet, daß das Trägermittel (10—13) zum Tragen der Führungsscheibe (81) und der Spannrolle (82) ausgebildet und angeordnet ist, so daß die Führungsscheibe (81), die lediglich axial innerhalb eines bestimmten Abstandes zu der Spannplatte (83) in einem Spalt (K) bewegbar ist, der zwischen der Führungsscheibe (81) und der Spannplatte (83) vorgesehen ist.

2. Kettenschaltung nach Anspruch 1, dadurch gekennzeichnet, daß eine Drechachse (9) zum Tragen der Kettenführung (8) schwenkbar auf dem beweglichen Teil (7) vorgesehen ist, wobei das Trägermittel (10—13) für die Führungsscheibe koaxial zur Drehachse (9) angeordnet ist.

3. Kettenschaltung für ein Fahrrad nach Anspruch 1, dadurch gekennzeichnet, daß das Trägermittel einen Lagerzylinder (11a) mit einer Gleitfläche für die Führungsscheibe (81) hat und durch ein Befestigungsmittel (10) an der Spannplatte (83) befestigt ist, und ein Begrenzungsmittel zum Begrenzen des Bewegungsabstandes der Führungsscheibe.

4. Kettenschaltung nach Anspruch 3, dadurch gekennzeichnet, daß die Spannfeder eine Schraubenfeder mit einem Paar von Halteenden (12a, 12b) ist, um die Drehachse (9) gehalten ist und mit einem Halteende (12a) mit dem beweglichen Teil (7) und dem anderen Halteende (12b) mit der Spannplatte (83) in Eingriff ist, wobei die Drehhachse (9) einen Federhalter (11) für die Feder hat, welcher (11) ein Eingriffsmittel (11b) aufweist, das in Eingriff mit dem Lagerzylinder (13) ist, so daß eine axiale Federkraft der Feder (12), die durch den Federhalter (11) aufgenommen wird, den Lagerzylinder (13) fest auf die Spannplatte (83) preßt.

5. Kettensschaltung nach Anspruch 4, dadurch gekennzeichnet, daß das Eingriffsmittel einen Vorsprung (11b) aufweist, der sich radial nach außen von dem Federhalter (11) erstreckt und eingreifbar mit einer Endfläche des Lagerzylinders (13) ist, wobei sich der Vorsprung (11b) radial nach außen bis über den äußeren Umfang des Lagerzylinders (13) hinaus erstreckt und wie das Begrenzungsmittel zum Begrenzen des Bewegungsspieles der Führungsscheibe (81) vorgesehen ist.

**Revendications**

1. Dérailleur arrière pour bicyclette, lequel dérailleur comporte un élément de fixation (3), un élément mobile (7) pouvant se déplacer par rapport à l'élément de fixation, un guide-chaîne (8) muni d'une chape de guidage (81), une roulette de tension (82) et au moins une chape de roulette (83) supportés de façon orientable sur l'élément mobile (7), et un ressort tendeur (12) agencé de façon à agir entre l'élément mobile (7) et le guide-chaîne (8), le guide-chaîne (8) étant muni d'un moyen de support (10—13) pour supporter de façon rotative la roulette de guidage (81) et la roulette de tension (82), caractérisé en ce que le moyen de support (10, 13) est formé et agencé de façon à supporter la roulette de guidage (81) et la roulette de tension (82) de façon que cette roulette de guidage (81) ne soit mobile axialement qu'à l'intérieur d'une plage prédéterminée par rapport à la chape de roulette (83) selon un débattement (K) prévu entre la roulette de guidage (81) et la chape de roulette (83).

2. Dérailleur selon la revendication 1, dans lequel un axe de pivotement (9) est prévu pour supporter le guide-chaîne (8) de façon orientable sur l'élément mobile (7), le moyen de support (10, 13) pour la roulette de guidage étant agencé coaxialement avec l'axe de pivotement (9).

3. Dérailleur pour bicyclette selon la revendication 2, dans lequel le moyens de support comporte un cylindre d'appui (11a) muni d'une face de glissement pour la roulette de guidage (81) et fixé par un moyen de fixation (10) sur la chape de roulette (83) et un moyen de limitation destiné à restreindre la plage de mouvement de la roulette de guidage (8).

4. Dérailleur selon la revendication 3, dans lequel le ressort de tension consiste en un ressort à boudin (12) qui est muni d'une paire d'extrémités de retenue (12a, 12b) et qui est monté autour de l'axe de pivotement (9) et coopère à une extrémité de retenue (12a) avec une élément mobile (7) et à l'autre extrémité de retenue (12b) avec la chape de roulette (83), l'axe de pivotement (9) étant muni d'un porte-ressort (11) pour ce ressort, ce porte-ressort (11) comportant un moyen de butée (11b) coopérant avec le cylindre d'appui (13) de sorte qu'une force élastique axiale de ce ressort (12) logé dans ce porte-ressort (11) applique à demeure le cylindre d'appui (13) contre la chape de roulette (83) .

5. Dérailleur selon la revendication 4, dans lequel le moyen de butée comprend une saillie (11b) s'étendant radialement vers l'extérieur à partir du porte-ressort (11) et pouvant coopérer avec une face d'extrémité du cylindre d'appui (13) cette saillie (11b) se projetant radialement vers l'extérieur au-delà de la périphérie extérieure du cylindre d'appui (13) et servant de moyen de limitation pour restreindre la plage de mouvement de la roulette de guidage (81).

FIG. 1

# FIG. 2

# FIG. 3

# FIG. 4
## (PRIOR ART)